# EUROPEAN PATENT APPLICATION

(11) **EP 4 607 010 A1**
(43) Date of publication of application: **27.08.2025**
(21) Application number: 23922253.2
(22) Date of filing: 21.07.2023
(51) Int. Cl.: F02B 71/04

(54) **FREE-PISTON LINEAR GENERATOR SYSTEM AND CONTROL METHOD THEREFOR**

(30) Priority: 16.02.2023 CN 202310126846
(71) Applicant: Zhejiang Geely Holding Group Co., Ltd., Hangzhou, Zhejiang 310051 (CN); Ningbo Geely Royal Engine Components Co., Ltd., Ningbo City, Zhejiang 315336 (CN)
(72) Inventor: LI, Shuangqing, Hangzhou, Zhejiang 310051 (CN); WEI, Hong, Hangzhou, Zhejiang 310051 (CN); HU, Ke, Hangzhou, Zhejiang 310051 (CN)
(74) Representative: Michalski Hüttermann & Partner Patentanwälte mbB
(86) International application number: PCT/CN2023/108705
(87) International publication number: WO 2024/169130

(57) **Abstract**

A free-piston linear generator system and control method therefor. The generator system includes: a cylinder block (3) having a first piston cavity, an intake port (1), a combustion chamber (7), an exhaust port (2) and a second piston cavity, the combustion chamber (7) being located between the first piston cavity and the second piston cavity, the intake port (1) being located between the first piston cavity and the combustion chamber (7), and the exhaust port (2) being located between the second piston cavity and the combustion chamber (7); a piston group including a first piston (5) and a second piston (6), the first piston (5) being movably disposed in the first piston cavity, and the second piston (6) being movably disposed in the second piston cavity, where a first reset unit is disposed between the first piston (5) and an end of the first piston cavity facing away from the combustion chamber (7), a second reset unit is disposed between the second piston (6) and an end of the second piston cavity facing away from the combustion chamber (7), and a driving force capable of accelerating and decelerating the second piston (6) is provided between the second piston (6) and a peripheral wall of the second piston cavity.

## Description

The present disclosure claims priority to Chinese Patent Application No. 202310126846.9 filed with the China National Intellectual Property Administration on February 16, 2023 and entitled "Free-piston linear generator system and control method therefor", the content of which is incorporated herein by reference in its entirety.

### TECHNICAL FIELD

The present disclosure relates to, but is not limited to, vehicle technologies, and in particular, to a free-piston linear generator system and a control method therefor.

### BACKGROUND

A free-piston linear generator (FPLG) is a new type of range extender suitable for electric vehicles, which has a naturally integrated engine and generator, compared with an engine-plus-generator structure. Due to the elimination of a crankshaft and connecting rod mechanism from the engine, the free-piston linear generator allows the piston to move freely without being constrained by mechanical structures, and thus the engine has advantages of simple and compact structure and fewer energy conversion processes. In addition, the free-piston linear generator has strong fuel universality, and different types of fuels can be used therein.

One of difficulties in the development of the free-piston linear generator is proper organization of a ventilation process. The proper organization of the ventilation process in the free-piston linear generator can improve volumetric efficiency, reduce scavenged air fuel mixture, improve engine efficiency, and reduce emissions. How to properly organize the ventilation process in the free-piston linear generator is a technical problem that those skilled in the art have been working to solve.

### SUMMARY

The following is a brief summary of subject matter that is described in detail herein. This summary is not intended to be limiting as to the scope of the claims.

A free-piston linear generator system provided by embodiments of the present disclosure includes: a cylinder block having a first piston cavity, an intake port, a combustion chamber, an exhaust port and a second piston cavity, the combustion chamber being located between the first piston cavity and the second piston cavity, the intake port being located between the first piston cavity and the combustion chamber, and the exhaust port being located between the second piston cavity and the combustion chamber; a piston group including a first piston and a second piston, the first piston being movably disposed in the first piston cavity and being configured to open and close the intake port, and the second piston being movably disposed in the second piston cavity and being configured to open and close the exhaust port, where a first reset unit is disposed between the first piston and an end of the first piston cavity facing away from the combustion chamber, a second reset unit is disposed between the second piston and an end of the second piston cavity facing away from the combustion chamber, a functional mechanism is disposed between the second piston and a peripheral wall of the second piston cavity, and the functional mechanism is configured to form a driving force for accelerating and decelerating the second piston.

A control method provided by embodiments of the present disclosure includes: in response to an operating frequency of the second piston being lower than a design frequency, controlling, during a process in which the first piston and the second piston move towards each other to close the exhaust port, the functional mechanism to accelerate the second piston, so that the second piston advances closing of the exhaust port.

A control method provided by embodiments of the present disclosure includes: in response to an operating frequency of the second piston being higher than a design frequency, controlling, during a process in which the first piston and the second piston move towards each other to close the exhaust port, the functional mechanism to decelerate the second piston, so that the second piston delays closing of the exhaust port.

Other features and advantages of the present disclosure will be set forth in the following description, and in part, become apparent from the description, or be understood by practice of the present disclosure. Other advantages of the present disclosure may be realized and obtained by the embodiments described in the specification and the accompanying drawings.

The following is a brief summary of subject matter that is described in detail herein. This summary is not intended to be limiting as to the scope of the claims.

### BRIEF DESCRIPTION OF DRAWINGS

FIG. 1 is a cross-sectional view illustrating a structure of a free-piston linear generator system according to some embodiments.
FIG. 2 is a displacement-time graph of a free-piston linear generator system when an operating frequency of a second piston is lower than a design frequency.
FIG. 3 is a displacement-time graph of a free-piston linear generator system when an operating frequency of a second piston is higher than a design frequency.

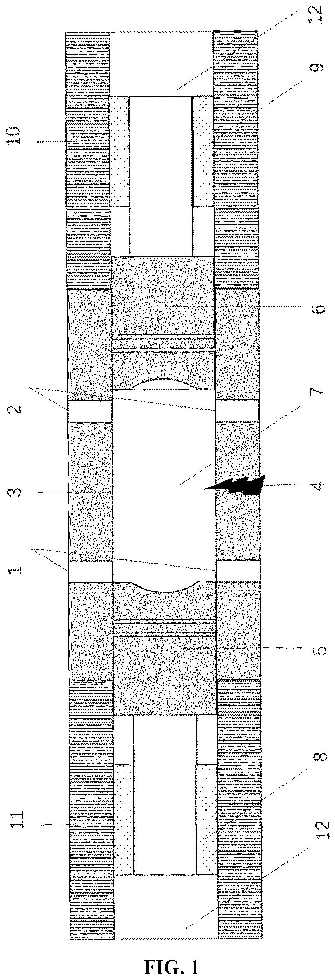

Correspondence between reference numerals and names of components in FIG. 1:
1-intake port, 2-exhaust port, 3-cylinder block, 4-spark plug, 5-first piston, 6-second piston, 7-combustion chamber, 8-first core, 9-second core, 10-second coil, 11-first coil, 12-air spring.

### DETAILED DESCRIPTION

The present disclosure describes a plurality of embodiments, but the description is exemplary rather than restrictive. In order to make the objectives, technical solutions, and advantages of the present disclosure clearer and more understandable, the embodiments of the present disclosure will be described in detail below with reference to the accompanying drawings. It should be noted that, the embodiments of the present disclosure and features in the embodiments may be combined with each other arbitrarily without conflict.

The present disclosure provides a free-piston linear generator system, which can organize a ventilation process more properly.

The present disclosure further provides a control method for a free-piston linear generator system.

As shown in FIG. 1, the free-piston linear generator system provided by the embodiments of the present disclosure includes: a cylinder block 3, having a first piston cavity, an intake port 1, a combustion chamber 7, an exhaust port 2 and a second piston cavity, the combustion chamber 7 being located between the first piston cavity and the second piston cavity, the intake port 1 being located between the first piston cavity and the combustion chamber 7, and the exhaust port 2 being located between the second piston cavity and the combustion chamber 7; a piston group including a first piston 5 and a second piston 6, the first piston 5 being axially movably disposed in the first piston cavity and being configured to open and close the intake port 1, and the second piston 6 being axially movably disposed in the second piston cavity and being configured to open and close the exhaust port 2, where a first reset unit is disposed between the first piston 5 and an end of the first piston cavity facing away from the combustion chamber 7, a second reset unit is disposed between the second piston 6 and an end of the second piston cavity facing away from the combustion chamber 7, a functional mechanism is disposed between the second piston 6 and a peripheral wall of the second piston cavity, and the functional mechanism is configured to form a driving force for accelerating and decelerating the second piston 6. The functional mechanism may be further configured to convert mechanical energy of the second piston 6 into electrical energy for power generation. The combustion chamber 7 is provided with structures such as a spark plug 4 and a fuel injector. An axial direction is an axial direction of the cylinder block 3.

When an operating frequency of the second piston 6 is lower than a design frequency, during a process in which the first piston 5 and the second piston 6 move towards each other to close the exhaust port 2, the functional mechanism is controlled to accelerate the second piston 6, so that the second piston 6 advances closing of the exhaust port. When an operating frequency of the second piston 6 is higher than a design frequency, during a process in which the first piston 5 and the second piston 6 move towards each other to close the exhaust port 2, the functional mechanism is controlled to decelerate the second piston 6, so that the second piston 6 delays closing of the exhaust port.

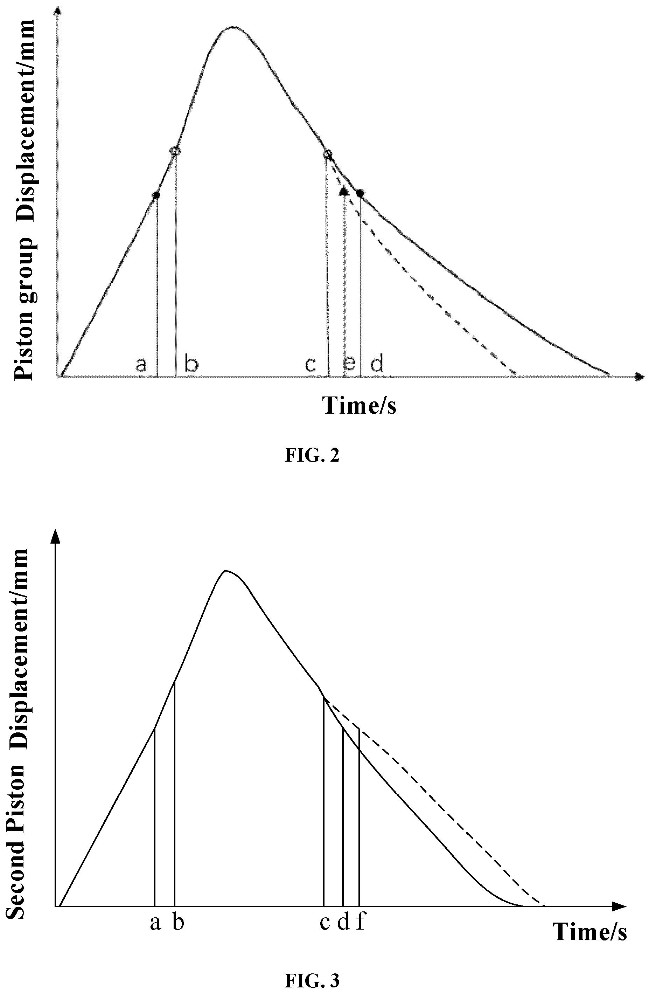

The second piston 6 is located at a right inner dead center which is located at a right end of the combustion chamber, and closes the exhaust port 2. The first piston 5 is located at a left inner dead center which is located at a left end of the combustion chamber, and closes the intake port 1. As shown by a solid line in FIG. 2, ignition and combustion are carried out in the combustion chamber 7 through the spark plug 4. High-temperature and high-pressure gas pushes the first piston 5 to the left and the second piston 6 to the right to do work through expansion. The exhaust port 2 is opened at time a and the intake port 1 is opened at time b, where the time b lags behind the time a. Then the intake port 1 and the exhaust port 2 are simultaneously opened, until the first piston 5 moves to the left to a left outer dead center, and the second piston 6 moves to the right to a right outer dead center. During this process in which the first piston 5 and the second piston 6 move away from each other in opposite directions, the functional mechanism converts the mechanical energy of the second piston 6 into electrical energy for power generation. After that, the first piston 5 moves to the right towards the combustion chamber 7 under an action of the first reset unit, and the second piston 6 moves to the left towards the combustion chamber 7 under an action of the second reset unit. The first piston 5 closes the intake port 1 at time c, and the second piston 6 closes the exhaust port 2 at time d, where the time d lags behind the time c. Finally, the first piston 5 moves to the left inner dead center, and the second piston 6 moves to the right inner dead center, which is a process in which the first piston 5 and the second piston 6 move towards each other in opposite directions.

At the design frequency, the free-piston linear generator has a properly-organized ventilation process, and has the advantages such as high volumetric efficiency, less scavenged air fuel mixture, high engine efficiency, and low emissions.

In practical use, when the operating frequency of the second piston 6 is lower than the design frequency, the air fuel mixture may be excessively scavenged during the movement of the first piston and the second piston towards each other to close the exhaust port 2. At this time, the functional mechanism is controlled to accelerate the second piston 6 during the movement of the first piston 5 and the second piston 6 towards each other to close the exhaust port 2, that is, a direction of the driving force is directed towards the combustion chamber 7, and is the same as a movement direction of the second piston 6. In this way, the second piston 6 closes the exhaust port 2 in advance at time e in FIG. 2, and a displacement-time curve of the second piston 6 in this process is changed to a dotted line in FIG. 2, thereby shortening an exhaust process, reducing escape of fresh air from the combustion chamber 7, and realizing accurate control of a scavenging process.

In practical use, when the operating frequency of the second piston 6 is higher than the design frequency, exhaust gas may not be smoothly discharged during the movement of the first piston and the second piston towards each other to close the exhaust port 2. At this time, the functional mechanism is controlled to decelerate the second piston 6, that is, a direction of the driving force is directed away from the combustion chamber 7, and is opposite to the movement direction of the second piston 6. In this way, the second piston 6 closes the exhaust port 2 with delay at time f in FIG. 3, and a displacement-time curve of the second piston 6 in this process is changed to a dotted line in FIG. 3, thereby prolonging the exhaust process, facilitating scavenging of the exhaust gas, and realizing accurate control of the scavenging process.

In some examples, as shown in FIG. 1, an energy conversion mechanism is provided between the first piston 5 and a peripheral wall of the first piston cavity. The energy conversion mechanism is configured to convert mechanical energy of the first piston 5 into electrical energy. The functional mechanism is configured to convert mechanical energy of the second piston 6 into electrical energy. The functional mechanism and the energy conversion mechanism work together to generate power, enabling higher power generation efficiency.

In some examples, as shown in FIG. 1, at least one of the functional mechanism and the energy conversion mechanism includes an electromagnet mechanism.

In some examples, as shown in FIG. 1, the energy conversion mechanism includes: a first coil 11, disposed around a peripheral wall of the first piston cavity; and a first core 8, disposed in the first piston cavity and connected to the first piston 5, the first reset unit being located between the first core 8 and an end of the first piston cavity facing away from the combustion chamber 7. In order to ensure the service life of the functional mechanism, the first reset unit includes an air spring 12.

In some examples, as shown in FIG. 1, the functional mechanism includes: a second coil 10, disposed around a peripheral wall of the second piston cavity; and a second core 9, disposed in the second piston cavity and connected to the second piston 6, the second reset unit being located between the second core 9 and an end of the second piston cavity facing away from the combustion chamber 7. In order to ensure the service life of the second reset unit, the second reset unit also includes an air spring 12.

In some examples, an axial distance between a center of the intake port 1 and a center of the combustion chamber 7 is greater than an axial distance between a center of the exhaust port 2 and the center of the combustion chamber 7. This arrangement allows the opening of the intake port 1 to lag behind the opening of the exhaust port 2 during the movement of the first piston 5 and the second piston 6 away from each other, and allows the closing of the exhaust port 2 to lag behind the closing of the intake port 1 during the movement of the first piston 5 and the second piston 6 towards each other.

The second piston 6 is located at the right inner dead center and closes the exhaust port 2, and the first piston 5 is located at the left inner dead center and closes the intake port 1. The ignition and combustion are carried out in the combustion chamber 7 through the spark plug 4. The high-temperature and high-pressure gas pushes the first piston 5 to the left and the second piston 6 to the right to do work through expansion. The exhaust port 2 is opened earlier than the intake port 1, and then the intake port 1 and the exhaust port 2 are simultaneously opened, until the first piston 5 moves to the left to the left outer dead center, and the second piston 6 moves to the right to the right outer dead center. During this process in which the first piston 5 and the second piston 6 move away from each other in opposite directions, the functional mechanism and the energy conversion mechanism convert the mechanical energy into the electrical energy for power generation. After that, the first piston 5 moves to the right towards the combustion chamber 7 under the action of the first reset unit, and the second piston 6 moves to the left towards the combustion chamber 7 under the action of the second reset unit. The intake port 1 is closed earlier than the exhaust port 2. Finally, the first piston 5 moves to the left inner dead center, and the second piston 6 moves to the right inner dead center, which is a process in which the first piston 5 and the second piston 6 move towards each other in opposite directions.

The free-piston linear generator system can use a conventional three-way catalyst to achieve equivalent combustion of the exhaust gas.

A control method (not shown in the figure) provided by the embodiments of the present disclosure includes: in response to the operating frequency of the second piston 6 being lower than the design frequency, controlling, during the process in which the first piston 5 and the second piston 6 move towards each other to close the exhaust port 2, the functional mechanism to accelerate the second piston 6, so that the second piston 6 advances closing of the exhaust port 2, thereby shortening the exhaust process, reducing the escape of fresh air from the combustion chamber 7, and realizing accurate control of the scavenging process.

In some examples, as shown in FIG. 2, during the process in which the first piston 5 and the second piston 6 move towards each other to close the exhaust port 2, the closing of the exhaust port 2 lags behind the closing of the intake port 1, so that more accurate control of the scavenging process can be realized.

In some examples, as shown in FIG. 2, during the movement of the first piston 5 and the second piston 6 away from each other, the exhaust port 2 is opened earlier than the intake port 1.

A control method (not shown in the figure) provided by the embodiments of the present disclosure includes: in response to the operating frequency of the second piston 6 being higher than the design frequency, controlling, during the process in which the first piston 5 and the second piston 6 move towards each other to close the exhaust port 2, the functional mechanism to decelerate the second piston 6, so that the second piston 6 delays closing of the exhaust port 2, thereby prolonging the exhaust process, facilitating scavenging of the exhaust gas, and realizing accurate control of the scavenging process.

In some examples, as shown in FIG. 3, during the process in which the first piston 5 and the second piston 6 move towards each other to close the exhaust port 2, the closing of the exhaust port 2 lags behind the closing of the intake port 1, so that more accurate control of the scavenging process can be realized.

In some examples, as shown in FIG. 3, during the movement of the first piston 5 and the second piston 6 away from each other, the exhaust port 2 is opened earlier than the intake port 1.

In summary, the free-piston linear generator system provided by the present disclosure has a simple and compact structure. When the operating frequency of the second piston is lower than the design frequency, the air fuel mixture may be excessively scavenged during the movement of the first piston and the second piston towards each other to close the exhaust port. At this time, the functional mechanism is controlled to accelerate the second piston, so that the second piston closes the exhaust port in advance, thereby shortening the exhaust process, and reducing the escape of fresh air from the combustion chamber. When the operating frequency of the second piston is higher than the design frequency, the exhaust gas may not be smoothly discharged during the movement of the first piston and the second piston towards each other to close the exhaust port. At this time, the functional mechanism is controlled to decelerate the second piston, so that the second piston closes the exhaust port with delay, thereby prolonging the exhaust process, and facilitating scavenging of the exhaust gas.

In the description of the present disclosure, it should be noted that the orientation or positional relationship indicated by the term "upper", "lower", "one side", "the other side", "one end", "the other end", "side", "relative", "four corners", "peripheral", "rectangular structure" or the like is based on the orientation or positional relationship shown in the drawings. They are only for the convenience of describing the present disclosure and simplifying the description, rather than indicating or implying that the structure referred to has a specific orientation or is constructed and operated in a specific orientation, and therefore cannot be understood as a limitation on the present disclosure.

In the description of the embodiments of the present disclosure, unless otherwise clearly specified and defined, the terms "connected", "directly connected", "indirectly connected", "fixedly connected", "installed", and "assembled" should be understood in a broad sense. For example, it may mean a fixed connection, a detachable connection, or an integral connection. The terms "installed", "connected", and "fixedly connected" may mean a direct connection, an indirect connection through an intermediate medium, or an internal communication between two elements. For those ordinary skilled in the art, the specific meanings of the above terms in the present disclosure can be understood according to specific circumstances.

It should be noted that the above embodiments or implementations are merely exemplary and are not limiting. Accordingly, the present disclosure is not limited to what has been particularly shown and described herein. Various modifications, substitutions or omissions may be made to the embodiments in the form and details without departing from the scope of the present disclosure.

## Claims

1. A free-piston linear generator system, comprising:
a cylinder block, comprising a first piston cavity, an intake port, a combustion chamber, an exhaust port and a second piston cavity, the combustion chamber being located between the first piston cavity and the second piston cavity, the intake port being located between the first piston cavity and the combustion chamber, and the exhaust port being located between the second piston cavity and the combustion chamber; and
a piston group comprising a first piston and a second piston, the first piston being movably disposed in the first piston cavity and being configured to open and close the intake port, and the second piston being movably disposed in the second piston cavity and being configured to open and close the exhaust port,
wherein a first reset unit is disposed between the first piston and an end of the first piston cavity facing away from the combustion chamber, a second reset unit is disposed between the second piston and an end of the second piston cavity facing away from the combustion chamber, a functional mechanism is disposed between the second piston and a peripheral wall of the second piston cavity, and the functional mechanism is configured to form a driving force for accelerating and decelerating the second piston.

2. The free-piston linear generator system of claim 1, wherein
in response to an operating frequency of the second piston being lower than a design frequency, the functional mechanism is controlled, during a process in which the first piston and the second piston move towards each other to close the exhaust port, to accelerate the second piston, so that the second piston advances closing of the exhaust port; and
in response to the operating frequency of the second piston being higher than the design frequency, the functional mechanism is controlled, during a process in which the first piston and the second piston move towards each other to close the exhaust port, to decelerate the second piston, so that the second piston delays closing of the exhaust port.

3. The free-piston linear generator system of claim 2, wherein an energy conversion mechanism is provided between the first piston and a peripheral wall of the first piston cavity, and the energy conversion mechanism is configured to convert mechanical energy into electrical energy.

4. The free-piston linear generator system of claim 3, wherein the energy conversion mechanism comprises an electromagnet mechanism.

5. The free-piston linear generator system of claim 1, wherein the functional mechanism is further configured to convert mechanical energy to electrical energy.

6. The free-piston linear generator system of claim 5, wherein the functional mechanism comprises an electromagnet mechanism.

7. The free-piston linear generator system of any one of claims 1 to 6, wherein the functional mechanism comprises:
a second coil, disposed around the peripheral wall of the second piston cavity; and
a second core, disposed in the second piston cavity and connected to the second piston,
wherein the second reset unit is located between the second core and the end of the second piston cavity facing away from the combustion chamber.

8. The free-piston linear generator system of any one of claims 1 to 6, wherein at least one of the first reset unit or the second reset unit comprises an air spring.

9. The free-piston linear generator system of any one of claims 1 to 6, wherein an axial distance between a center of the intake port and a center of the combustion chamber is greater than an axial distance between a center of the exhaust port and the center of the combustion chamber.

10. A control method for the free-piston linear generator system of any one of claims 1 to 9, comprising:
in response to an operating frequency of the second piston being lower than a design frequency, controlling, during a process in which the first piston and the second piston move towards each other to close the exhaust port, the functional mechanism to accelerate the second piston, so that the second piston advances closing of the exhaust port.

11. The control method of claim 10, wherein during the process in which the first piston and the second piston move towards each other to close the exhaust port, the closing of the exhaust port lags behind closing of the intake port.

12. A control method for the free-piston linear generator system of any one of claims 1 to 9, comprising:
in response to an operating frequency of the second piston being higher than a design frequency, controlling, during a process in which the first piston and the second piston move towards each other to close the exhaust port, the functional mechanism to decelerate the second piston, so that the second piston delays closing of the exhaust port.

13. The control method of claim 12, wherein during the process in which the first piston and the second piston move towards each other to close the exhaust port, the closing of the exhaust port lags behind closing of the intake port.
